# EUROPEAN PATENT SPECIFICATION

(11) **EP 4 239 200 B1**
(45) Date of publication and mention of the grant of the patent: **01.04.2026**
(21) Application number: 23154446.1
(22) Date of filing: 01.02.2023
(51) Int. Cl.: F04D 19/04, F04D 29/058, F04D 29/64, F16C 32/04

(54) **VACUUM PUMP WITH AN AXIALLY ADJUSTABLE MAGNETIC BEARING**
VAKUUMPUMPE MIT EINEM IN AXIALLER RICHTUNG VERSTELLBAREN MAGNETLAGER
POMPE À VIDE AVEC PALIER MAGNÉTIQUE AJUSTABLE DANS LA DIRECTION AXIALE

(30) Priority: 09.02.2022 JP 2022018857; 07.12.2022 JP 2022195651
(43) Date of publication of application: 06.09.2023
(73) Proprietor: SHIMADZU CORPORATION, Kyoto-shi, Kyoto 604-8511 (JP)
(72) Inventor: NISHIMURA, Taiki, Kyoto-shi, Kyoto, 604-8511 (JP)
(74) Representative: Müller-Boré & Partner Patentanwälte PartG mbB

(56) References cited:
- EP-A1- 3 106 668
- EP-A1- 3 112 689
- EP-A1- 3 447 299
- US-A1- 2003 086 784
- US-A1- 2021 018 387

## Description

### BACKGROUND OF THE INVENTION

### 1. TECHNICAL FIELD

The present invention relates to a vacuum pump.

### 2. BACKGROUND ART

A turbo-molecular pump is used as, e.g., a vacuum pump for ultra-high vacuum or a vacuum pump for a leak detector. For example, a vacuum pump described in JP-A-2020-122529 houses a rotor inside a housing, and performs vacuum pumping by tens of thousands of rotations of the rotor.

In the vacuum pump described in JP-A-2020-122529, the rotor is rotatably supported on the housing by a magnetic bearing and a rolling bearing. The magnetic bearing includes a rotary-side magnet arranged on the rotor and a stationary-side magnet arranged on a magnet holder portion fixed to the housing. The rolling bearing needs to be applied with a preload in order to reduce rattling or noise upon rotation. The position of the rotary-side magnet with respect to the stationary-side magnet is adjusted so that a proper preload can be applied to the rolling bearing.

The position of the rotary-side magnet is adjusted in such a manner that a magnet nut screwed onto the magnet holder portion is rotated. The housing is formed with an inlet port above the magnet nut, and a worker can rotate the magnet nut through the suction port.
EP 3 112 689 A1 describes a split-flow vacuum pump with at least two radial inlets. The vacuum pump has stator disks and rotor disks arranged on a shaft, and at least one disk pack is arranged on the shaft, in which at least two grooves and/or bores are arranged in the radial direction in the shaft.
US 2003/086784 A1 describes a compound vacuum pump comprising at least one turbo-molecular stage and downstream therefrom a multi-channel molecular drag stage. EP 3 106 668 A1 describes a turbomolecular pump, with a rotor rotatably mounted in a stator for at least one pumping stage.
US 2021/018387 A1 describes a bearing preload force gauge for indicating the bearing preload force on a turbomolecular pump rotor bearing.

EP3 447 299 A1 discloses an adjustment ring with an adjustment section for axially aligning a radially inner first bearing section of a bearing of a vacuum pump in the direction of a longitudinal center axis of the bearing relative to a radially outer second bearing section of the bearing.

### SUMMARY OF THE INVENTION

However, in, e.g., a turbo-molecular pump used for a leak detector, an inlet port is not provided above a magnet nut, and in some cases, is formed at the side of the magnet nut.

The present invention is intended to provide a vacuum pump capable of easily adjusting the position of a magnet even in a case where an inlet port is formed at a side surface of a housing. The present invention is defined by the features of the independent claim. Preferred examples are defined in the dependent claims.

According to the present invention, the vacuum pump can be provided, which is capable of easily adjusting the position of the magnet even in a case where the inlet port is formed at the side surface of the housing.

### BRIEF DESCRIPTION OF THE DRAWINGS

Fig. 1 is a sectional view of a vacuum pump according to a first embodiment;
Fig. 2 is an enlarged view of a portion indicated by S in Fig. 1;
Fig. 3 is a perspective view of a magnet nut of the vacuum pump according to the first embodiment;
Fig. 4 is a plan view of the magnet nut of the vacuum pump according to the first embodiment;
Fig. 5 is a view for describing a method for adjusting the position of a first permanent magnet in the vacuum pump according to the first embodiment;
Fig. 6 is a view showing a state in which a tool is inserted into a through-hole of the magnet nut of the vacuum pump according to the first embodiment;
Fig. 7A is a sectional view showing a thrust nut of the vacuum pump according to the first embodiment, and Fig. 7B is a schematic view showing a tool for measuring a preload applied to a rolling bearing of the vacuum pump according to the first embodiment;
Fig. 8 is a sectional view showing the vicinity of a first inlet port of a vacuum pump according to a second embodiment which is not according to the claimed invention;
Fig. 9 is a perspective view showing a rotor blade unit positioned closest to a first inlet port side in the vacuum pump according to the second embodiment;
Fig. 10 is a plan view showing the rotor blade unit positioned closest to the first suction port side in the vacuum pump according to the second embodiment;
Fig. 11 is a sectional view showing a state in which a setscrew is inserted into a balance correction hole of a rotation balance correction portion by a tool in the vacuum pump according to the second embodiment;
Fig. 12A is a plan view of a magnet nut of a vacuum pump according to a variation of the first embodiment, and Fig. 12B is a side view of the magnet nut of the vacuum pump according to the variation of the first embodiment;
Fig. 13A is a plan view of a magnet nut of a vacuum pump according to another variation of the first embodiment, and Fig. 13B is a side view of the magnet nut of the vacuum pump according to another variation of the

### first embodiment; and

Fig. 14A is a sectional view showing a thrust nut of a vacuum pump according to still another variation of the first embodiment, and Fig. 14B is a schematic view showing a tool for measuring a preload applied to a rolling bearing of the vacuum pump according to the still another variation of the first embodiment.

### DETAILED DESCRIPTION OF THE EXEMPLARY EMBODIMENTS

Hereinafter, vacuum pumps of embodiments of the present disclosure will be described with reference to the drawings.

### (First Embodiment)

A vacuum pump according to a first embodiment will be described.

### (Vacuum Pump 1)

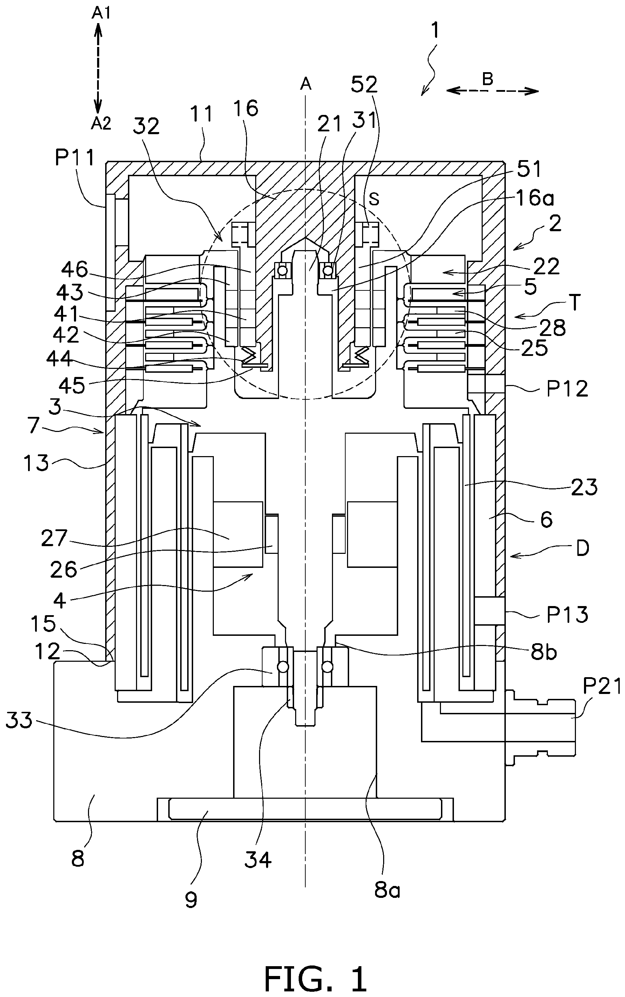

Fig. 1 is a sectional view of the vacuum pump 1 according to the embodiment.

The vacuum pump 1 includes a turbine portion T and a drag pump portion D. The turbine portion T forms a turbo-molecular pump. The drag pump portion D forms a screw groove pump. The vacuum pump 1 is connected to a pumping target device including a pumping target space. Gas from the pumping target space is pumped by the turbine portion T, and thereafter, is pumped by the drag pump portion D. Then, the gas is pumped to the outside of the vacuum pump 1.

As shown in Fig. 1, the vacuum pump 1 has a housing 2, a rotor 3, a motor 4, multiple stator blade units 5, and a stator cylindrical portion 6. The housing 2 houses the rotor 3, the motor 4, the multiple stator blade units 5, and the stator cylindrical portion 6.

### (Housing 2)

The housing 2 has a case 7 and a base 8. The housing 2 is made of metal such as aluminum alloy or iron. The case 7 is a tubular member.

The case 7 houses the multiple stator blade units 5 and multiple stages of rotor blade units 22 provided at the rotor 3. The case 7 has a first end portion 11, a second end portion 12, and a side portion 13. The first end portion 11 is arranged perpendicularly to the axis A of the rotor 3 to cover the rotor 3.

The second end portion 12 is positioned on the side opposite to the first end portion 11 in the direction of the axis A of the rotor 3. The second end portion 12 is connected to the base 8. The side portion 13 connects the first end portion 11 and the second end portion 12 to each other. A first inlet port P11 and second inlet ports P12, P13 are formed at the side portion 13 of the case 7. The first inlet port P11 is formed in the vicinity of the first end portion 11 at the side portion 13. The pumping target device including the pumping target space is connected to the first inlet port P11.

The base 8 is arranged to close an opening of the case 7 on a second end portion 12 side. The case 7 and the base 8 house the stator cylindrical portion 6 and a rotor cylindrical portion 23 provided at the rotor 3. The base 8 has a base end portion 15. The base end portion 15 is connected to the second end portion 12 of the case 7. Note that connection between the case 7 and the base 8 includes joint between separate members and connection between separate portions of an integrated member.

An outlet port P21 is formed at a side surface of the base 8. An auxiliary pump is connected to the outlet port P21. An exhaust path from the first inlet port P11 to the outlet port P21 is formed in an internal space of the housing 2. The multiple second inlet ports P12, P13 are connected to the exhaust path. In the case of using the vacuum pump 1 as a leak detector, pipes from a test sample are each connected to the multiple second inlet ports P12, P13. The second inlet port P12 is formed between the turbine portion T and the drag pump portion D. The second inlet port P13 is formed in the middle of the drag pump portion D. Note that the second inlet ports P12, P13 are not necessarily formed depending on use of the vacuum pump 1.

### (Rotor 3)

The rotor 3 has a shaft 21, the multiple stages of the rotor blade units 22, and the rotor cylindrical portion 23.

The shaft 21 extends in the direction of the axis A of the rotor 3. In description below, in the axis A direction, a direction from the base 8 toward the case 7 will be referred to as a first direction A1, and the opposite direction thereof will be referred to as a second direction A2.

The vacuum pump 1 has a magnet holder portion 16. The magnet holder portion 16 is arranged inside the case 7. The magnet holder portion 16 is arranged so as to extend from the first end portion 11 of the case 7 toward the base 8. The magnet holder portion 16 is formed integrally with the case 7. Integral formation includes, for example, molding with the same material by a die and formation by cutting.

The magnet holder portion 16 has a columnar outer shape. An end of the magnet holder portion 16 on a second direction A2 side is formed with a recessed portion 16a which is recessed in the first direction A1. An end of the shaft 21 on a first direction A1 side is inserted into the recessed portion 16a.

A recessed portion 8a recessed in the first direction A1 is formed at the center of a surface of the base 8 on the second direction A2 side. The vacuum pump 1 has a lid 9. The lid 9 is arranged to close the recessed portion 8a of the base 8.

A through-hole 8b is formed along the axis A direction at a top portion of the recessed portion 8a of the base 8 on the first direction A1 side. The shaft 21 is inserted into the through-hole 8b, and an end of the shaft 21 on the second direction A2 side protrudes to the inside of the recessed portion 8a.

The vacuum pump 1 has a protective bearing 31, a magnetic bearing 32, and a rolling bearing 33. The protective bearing 31 is arranged between the magnet holder portion 16 and the shaft 21. The protective bearing 31 is arranged inside the recessed portion 16a of the magnet holder portion 16. The protective bearing 31 functions as a touchdown bearing configured to limit runout of the first direction A1 side of the shaft 21 in a radial direction. In a state in which the shaft 21 rotates in a steady state, the shaft 21 and the protective bearing 31 do not contact each other. In a case where great disturbance is applied or a case where whirling of the shaft 21 upon acceleration or deceleration of rotation becomes greater, the shaft 21 contacts an inner surface of an inner ring of the protective bearing 31. For example, a ball bearing can be used as the protective bearing 31.

The magnetic bearing 32 is arranged between the magnet holder portion 16 and the rotor 3. The magnetic bearing 32 supports the rotor 3 in a non-contact manner. The magnetic bearing 32 will be described in detail later.

The rolling bearing 33 is arranged between the shaft 21 and the base 8. The rolling bearing 33 rotatably supports the shaft 21 on the base 8. The rolling bearing 33 is arranged in the through-hole 8b of the base 8. For example, a ball bearing can be used as the rolling bearing 33. The vacuum pump 1 has a thrust nut 34 (one example of a preload application member, one example of a nut member) fixed to the shaft 21. The thrust nut 34 is arranged on a portion of the shaft 21 protruding from the through-hole 8b and positioned inside the recessed portion 8a. The thrust nut 34 is arranged on the second direction A2 side of the rolling bearing 33. When the later-described magnetic bearing 32 is adjusted, a force of moving the rotor 3 toward the case 7 is applied to the rotor 3, and accordingly, the thrust nut 34 applies a preload to the rolling bearing 33 in the first direction A1.

The multiple stages of the rotor blade units 22 are connected to the shaft 21. The multiple stages of the rotor blade units 22 are arranged at intervals in the axis A direction. Each rotor blade unit 22 includes multiple rotor blades 25. Although not shown in the figure, each of the multiple rotor blades 25 radially extends about the shaft 21. Note that in the drawing, reference numerals are assigned only to one of the multiple stages of the rotor blade units 22 and one of the multiple rotor blades 25, and reference numerals for the other rotor blade units 22 and the other rotor blades 25 are not shown.

The rotor cylindrical portion 23 is connected to the shaft 21. The rotor cylindrical portion 23 is arranged below the rotor blade units 22. The rotor cylindrical portion 23 is in a cylindrical shape, and extends in the axis A direction. The rotor cylindrical portion 23 is arranged to surround the shaft 21 on an outer peripheral side thereof. An outer peripheral surface of the rotor cylindrical portion 23 is a tubular curved surface.

### (Motor 4)

The motor 4 rotatably drives the rotor 3. For example, a DC brushless motor is used as the motor 4. The motor 4 has a motor rotor 26 and a motor stator 27. The motor rotor 26 is attached to the shaft 21. The motor stator 27 is attached to the base 8. The motor stator 27 is arranged to face the motor rotor 26.

### (Multiple Stages of Stator Blade Units 5)

The multiple stages of the stator blade units 5 are connected to an inner surface of the case 7. The multiple stages of the stator blade units 5 are arranged at intervals in the axis A direction. Each of the multiple stages of the stator blade units 5 is arranged between adjacent ones of the multiple stages of the rotor blade units 22. Each stator blade unit 5 includes multiple stator blades 28. Although not shown in the figure, each of the multiple stator blades 28 radially extends about the shaft 21.

The multiple stages of the rotor blade units 22 and the multiple stages of the stator blade units 5 form the turbine portion T (the turbo-molecular pump). Note that in the drawing, reference numerals are assigned only to one of the multiple stator blade units 5 and one of the multiple stator blades 28, and reference numerals for the other stator blade units 5 and the other stator blades 28 are not shown.

### (Stator Cylindrical Portion 6)

The stator cylindrical portion 6 is arranged outside the rotor cylindrical portion 23 in the radial direction. The stator cylindrical portion 6 is connected to the base 8. The stator cylindrical portion 6 is arranged to face the rotor cylindrical portion 23 in the radial direction thereof.

A spiral screw groove is provided at an inner peripheral surface of the stator cylindrical portion 6. The rotor cylindrical portion 23 and the stator cylindrical portion 6 form the drag pump portion D (the screw groove pump) .

### (Magnetic Bearing 32)

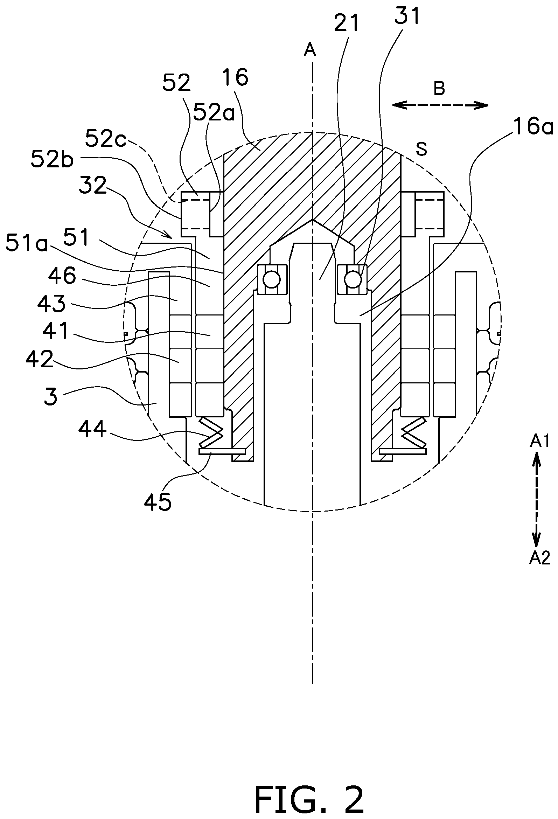

Fig. 2 is an enlarged view of a portion indicated by S in Fig. 1. The magnetic bearing 32 has first permanent magnets 41 (one example of a first magnet) and second permanent magnets 42 (one example of a second magnet). The first permanent magnets 41 are arranged on an outer peripheral surface of the magnet holder portion 16. The second permanent magnets 42 are fixed to an inner peripheral surface of the rotor 3. The first permanent magnet 41 and the second permanent magnet 42 are arranged to face each other in the radial direction B.

The first permanent magnet 41 and the second permanent magnet 42 are in a ring shape. In Fig. 1, three first permanent magnets 41 and three second permanent magnets 42 are arranged along the axis A direction, but the number of first permanent magnets 41 and the number of second permanent magnets 42 are not limited to above.

There is a clearance between the first permanent magnet 41 and the second permanent magnet 42. Each of ring-shaped magnet elements forming the first permanent magnets 41 and the second permanent magnets 42 is arranged such that the N-pole is at one end in the axis A direction and the S-pole is at the other end. The ring-shaped magnet elements of the first permanent magnets 41 stacked on each other are arranged such that the N-poles or the S-poles face each other in the axis A direction. The ring-shaped magnet elements of the second permanent magnets 42 stacked on each other are arranged such that the N-poles or the S-poles face each other in the axis A direction. The first permanent magnets 41 and the second permanent magnets 42 are arranged such that the same polarities substantially face each other. By positional shift in the axis A direction, a force of moving the shaft 21 in the first direction A1 relative to the case 7 and the base 8 is applied to the shaft 21, and accordingly, the thrust nut 34 applies the preload to the rolling bearing 33. The positional shift amount of the first permanent magnet 41 with respect to the second permanent magnet 42 in the axis A direction is adjusted so that the preload can be adjusted.

As shown in Fig. 2, the vacuum pump 1 has a fixing member 43, a disc spring 44, a spring support member 45, and a magnet nut 46 (one example of an adjustment member) .

The fixing member 43 is arranged on a surface of the second permanent magnet 42 on the first direction A1 side. The fixing member 43 is in a ring shape. It is shown that the fixing member 43 is connected to the rotor 3 and is integrated with the rotor 3, but the fixing member 43 may be a separate component. The fixing member 43 is a pressing member for fixing the positions of the second permanent magnets 42. In a case where the fixing member 43 is separated from the rotor 3, the fixing member 43 is fixed to the rotor 3 by, e.g., shrinkage/cooling fit.

The disc spring 44 is arranged on the second direction A2 side of the first permanent magnet 41. An end of the disc spring 44 on the side opposite to the first permanent magnet 41 is supported by the spring support member 45 fixed to the magnet holder portion 16. The disc spring 44 which is an elastic body elastically supports the first permanent magnets 41 between the magnet nut 46 arranged on a surface of the first permanent magnet 41 on the first direction A1 side and the spring support member 45. Note that a simring may be arranged between the disc spring 44 and the first permanent magnet 41.

### (Magnet Nut 46)

The magnet nut 46 is in a ring shape. The magnet nut 46 is arranged on the surface of the first permanent magnet 41 on the first direction A1 side. The magnet nut 46 adjusts the positions of the first permanent magnets 41 in the axis A direction. The magnet nut 46 is regarded as a pressing member for receiving the pressure of the preload applied to the rolling bearing 33 due to repulsive force of the magnet. The magnet nut 46 is movably arranged at the outer periphery of the magnet holder portion 16.

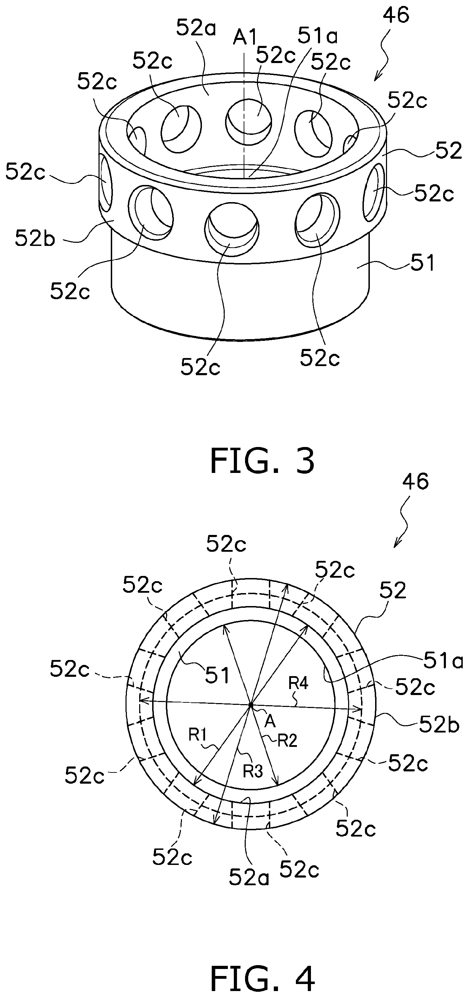

Fig. 3 is a perspective view of the magnet nut 46. Fig. 4 is a plan view of the magnet nut 46. The magnet nut 46 has a first portion 51 to be screwed onto the magnet holder portion 16 and a second portion 52 formed with through-holes 52c in which a later-described rotation tool 61 (one example of a tool) is to be locked.

The first portion 51 is arranged on a first permanent magnet 41 side with respect to the second portion 52. The first portion 51 is a portion of the magnet nut 46 pressing the first permanent magnet 41. The first portion 51 is in a ring shape. An internal thread shape (one example of a second thread shape) is formed at an inner peripheral surface 51a of the first portion 51. An external thread shape (one example of a first thread shape) is formed at the outer peripheral surface of the magnet holder portion 16. The internal thread shape of the first portion 51 of the magnet nut 46 fits the external thread shape of the outer peripheral surface of the magnet holder portion 16. The first portion 51 is arranged to face the fixing member 43 in the radial direction.

The second portion 52 is connected to an end of the first portion 51 on the side opposite to the first permanent magnet 41. The second portion 52 is in a ring shape. As shown in Fig. 4, the second portion 52 is arranged coaxially with the first portion 51. As shown in Fig. 4, the inner diameter R1 of the second portion 52 is formed greater than the inner diameter R2 of the first portion 51. No internal thread shape is formed at an inner peripheral surface 52a of the second portion 52. The outer diameter R3 of the second portion 52 is formed greater than the outer diameter R4 of the first portion 51. The second portion 52 is positioned outside the first portion 51 in the radial direction. The second portion 52 is arranged on a first end portion 11 side (the first direction A1 side) with respect to the fixing member 43 in the axis A direction. Thus, the second portion 52 can be positioned outside the first portion 51. As shown in Fig. 1, the second portion 52 is arranged to face the first inlet port P11 in the radial direction B.

The multiple through-holes 52c are formed at a side surface 52b of the second portion 52. The multiple through-holes 52c are formed along the radial direction B. At the magnet nut 46, the multiple through-holes 52c are formed at equal intervals along a circumferential direction. In the example shown in Figs. 3 and 4, 10 through-holes 52c are formed at the second portion 52. The 10 through-holes 52c are formed at an interval of 36° about the axis A.

Since the magnet nut 46 is screwed onto the magnet holder portion 16, the magnet nut 46 is movable along the axis A direction by rotating relative to the magnet holder portion 16 in the circumferential direction. Note that a spacer for protecting the first permanent magnet 41 may be arranged between the magnet nut 46 and the first permanent magnet 41.

When the magnet nut 46 rotates relative to the magnet holder portion 16 about the axis A, the magnet nut 46 moves in the axis A direction. By movement of the magnet nut 46, the first permanent magnets 41 elastically supported by the disc spring 44 move along the axis A direction. By rotation of the magnet nut 46, the position of the first permanent magnet 41 with respect to the second permanent magnet 42 can be adjusted.

### (Position Adjustment Method)

Next, a method for adjusting the position of the first permanent magnet 41 will be described. The magnet nut 46 is rotated about the axis A, and accordingly, the position of the first permanent magnet 41 with respect to the second permanent magnet 42 is adjusted and a proper preload is applied to the rolling bearing 33.

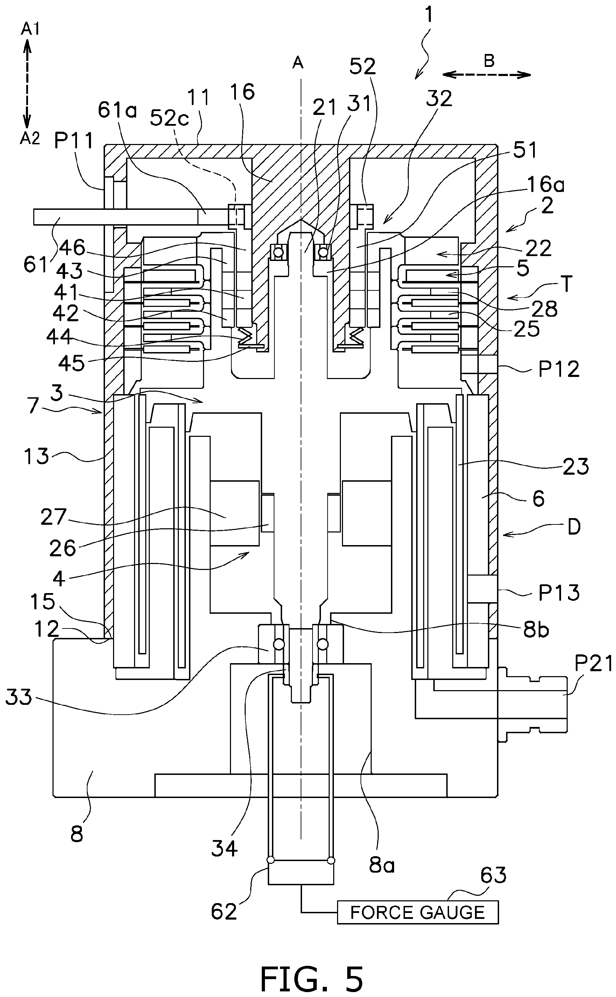

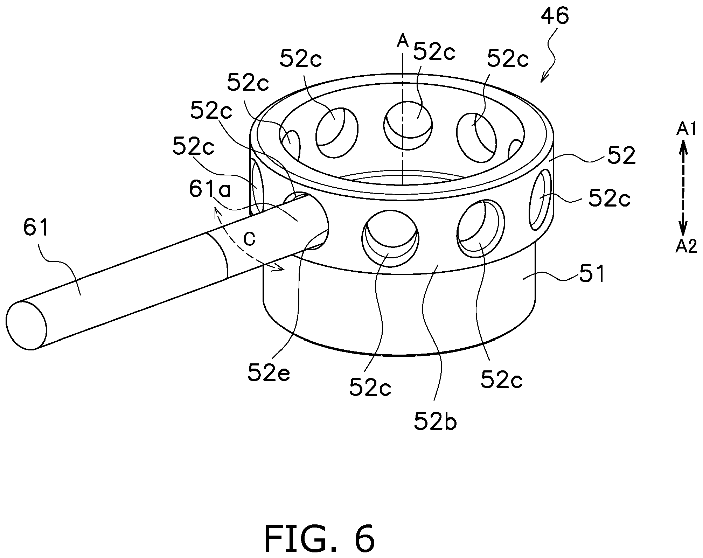

Fig. 5 is a view for describing the method for adjusting the position of the first permanent magnet 41. As shown in Fig. 5, a worker inserts the rotation tool 61 for rotating the magnet nut 46 through the first inlet port P11 of the vacuum pump 1. As shown in Fig. 6, a tip end 61a of the rotation tool 61 is inserted into the through-hole 52c of the magnet nut 46. The rotation tool 61 is in a rod shape. The tip end 61a of the rotation tool 61 is preferably covered with an elastic member, such as rubber, for protecting the magnet nut 46 and the rotor 3. The tip end 61a of the rotation tool 61 is moved in the right-left direction C (also regarded as a direction perpendicular to the axis A) with the rotation tool 61 inserted into the through-hole 52c of the magnet nut 46, and accordingly, the magnet nut 46 can be rotated about the axis A relative to the magnet holder portion 16. In this manner, the magnet nut 46 can be rotated with the rotation tool 61 locked at an edge 52e of the through-hole 52c (one example of a locking portion). The shape of the rotation tool 61 is not limited as long as the magnet nut 46 can be rotated. In the present embodiment, the rotation tool 61 is in a columnar shape, but may be in a polygonal shape.

As shown in Fig. 5, a gripping tool 62 (one example of a tool) is attached to the thrust nut 34. In a state in which the lid 9 is not attached to the base 8, the gripping tool 62 can be inserted into the recessed portion 8a.

For example, recessed portions are formed at a side surface of the thrust nut 34, and tip ends of the gripping tool 62 are hooked on the recessed portions. The gripping tool 62 is attached to a force gauge 63, and the force applied to the thrust nut 34 can be measured by pulling of the gripping tool 62 in the second direction A2.

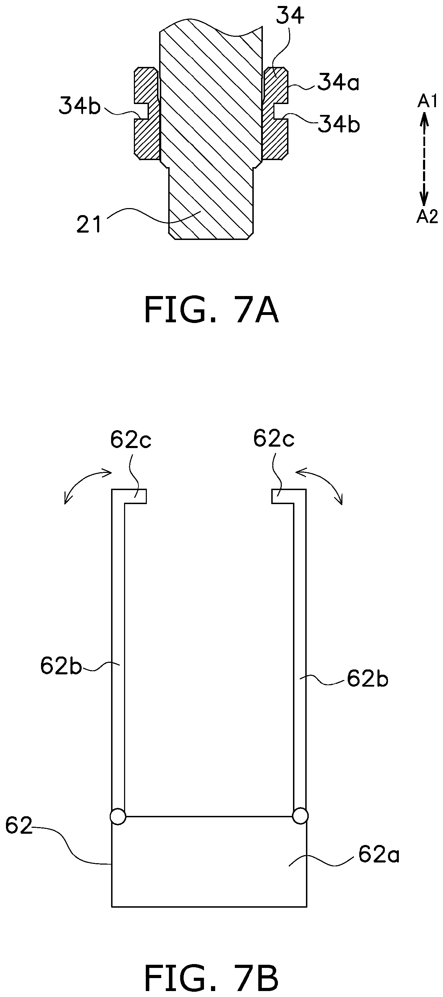

Fig. 7A is a sectional view showing the shape of the thrust nut 34. The thrust nut 34 has recessed portions 34b (one example of an engagement target portion) formed at a side surface 34a. At least two recessed portions 34b are preferably formed to face each other with respect to the axis A, and multiple pairs of opposing recessed portions 34b are preferably formed in the circumferential direction. Fig. 7B is a schematic view of the gripping tool 62. The gripping tool 62 has, for example, a support portion 62a and a pair of turning portions 62b turnable (see arrows) relative to the support portion 62a. Each turning portion 62b extends from the support portion 62a in the first direction A1. The pair of turning portions 62b is arranged to face each other. A tip end 62c of the turning portion 62b protrudes inward. These tip ends 62c are inserted into the recessed portions 34b of the thrust nut 34, and in this manner, the gripping tool 62 engages with the thrust nut 34.

The magnetic bearing 32 applies a force of moving the thrust nut 34 in the first direction A1 to the thrust nut 34. In a state in which the thrust nut 34 is gripped with the gripping tool 62, the force is applied to move the gripping tool 62 in the second direction A2, and the force when the thrust nut 34 is moved in the second direction A2 is read by the force gauge 63. In this manner, the preload in the current state can be measured. In a case where the preload is lower than a proper value, the magnet nut 46 is rotated in one direction about the axis A by the rotation tool 61, and in this manner, the position shift amount between the first permanent magnet 41 and the second permanent magnet 42 is increased. On the other hand, in a case where the preload is higher than the proper value, the magnet nut 46 is rotated in the other direction about the axis A by the rotation tool 61, and in this manner, the position shift amount between the first permanent magnet 41 and the second permanent magnet 42 is decreased.

After the magnet nut 46 has been rotated using the rotation tool 61 as described above, the value of movement of the thrust nut 34 in the second direction A2 by downward movement of the gripping tool 62 is read by the force gauge 63. This process is repeated so that the position of the first permanent magnet 41 can be adjusted in order to apply the proper preload to the rolling bearing 33.

### (Second Embodiment)

A vacuum pump according to a second embodiment, which is not according to the claimed invention, will be described.

A turbo-molecular pump is used as, e.g., a vacuum pump for ultra-high vacuum or a vacuum pump for a leak detector. For example, a vacuum pump described in JP-A-2020-122529 houses a rotor inside a housing, and performs vacuum pumping by tens of thousands of rotations of the rotor.

As described above, the turbo-molecular pump rotatably drives the rotor at a high speed which is about tens of thousands of rotations per minute, and there is a demand for vibration reduction during operation including acceleration. In order to reduce vibration, precise balance correction is required.

In the vacuum pump described in JP-A-2020-122529, a inlet port is formed above the rotor at the housing, and a worker corrects rotation balance of the rotor through the inlet port.

However, in, e.g., a turbo-molecular pump used for a leak detector, an inlet port is not provided above a magnet nut, and in some cases, is formed at the side of a rotor.

The present embodiment is intended to provide a vacuum pump capable of easily correcting rotation balance of a rotor even in a case where an inlet port is formed at a side surface of a housing.

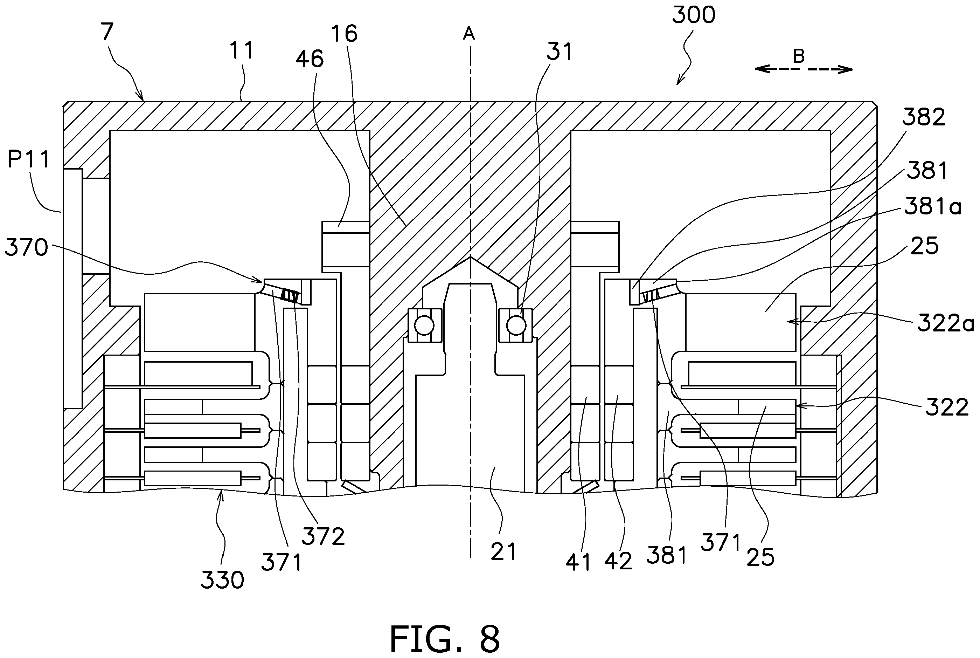

Fig. 8 is a sectional view showing the vicinity of a first inlet port P11 of a vacuum pump 300 of the second embodiment. The vacuum pump 300 of the second embodiment is, as compared to the vacuum pump 1 of the first embodiment, provided with a rotation balance correction portion 370 for correcting rotation balance of a rotor 330.

As shown in Fig. 8, the rotor 330 of the vacuum pump 300 has a shaft 21, multiple stages of rotor blade units 322, a rotor cylindrical portion 23, and the rotation balance correction portion 370. It is shown that the rotor 330 and a fixing member 43 are connected to each other and are integrated with each other, but the rotor 330 and the fixing member 43 may be separate components. The shaft 21 and the rotor cylindrical portion 23 (see Fig. 1) are the same as those of the first embodiment. As in the first embodiment, each of the multiple stages of the rotor blade units 322 is connected to the shaft 21. The multiple stages of the rotor blade units 322 are arranged at intervals in an axis A direction. Of the multiple rotor blade units 322, the rotor blade unit 322 closest to a first inlet port P11 side will be referred to as 322a.

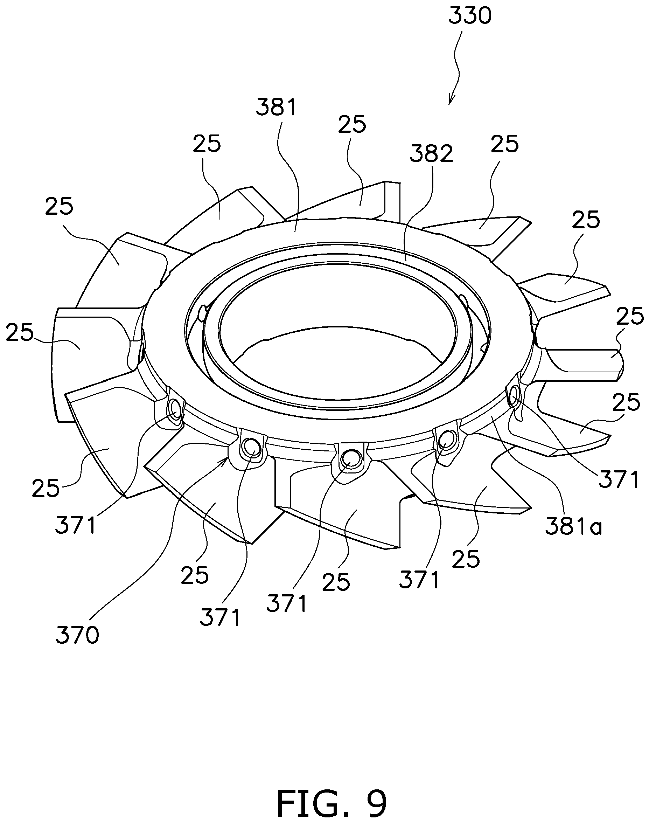

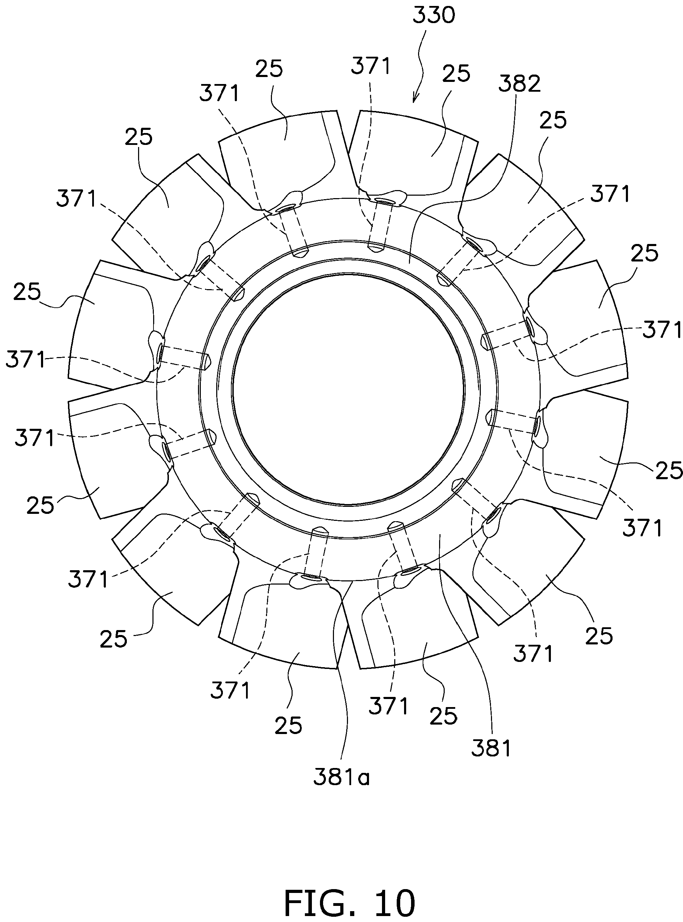

Fig. 9 is a perspective view showing the rotor blade unit 322a. Fig. 10 is a plan view of the rotor blade unit 322a. As shown in Figs. 9 and 10, the rotor blade unit 322a includes a cylindrical portion 381 and multiple rotor blades 25. The cylindrical portion 381 is arranged outside the shaft 21. The multiple rotor blades 25 are fixed to the cylindrical portion 381. The multiple rotor blades 25 are arranged at the periphery of the cylindrical portion 381. Note that each of the rotor blade units 322 other than the rotor blade unit 322a also includes a cylindrical portion 381 and multiple rotor blades 25.

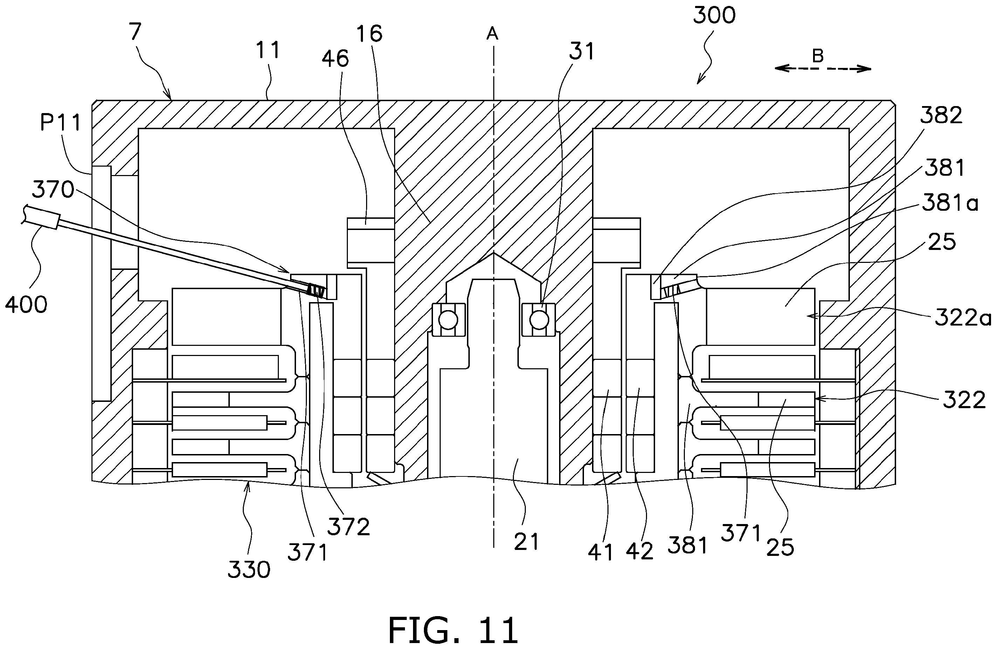

The rotation balance correction portion 370 corrects the rotation balance of the rotor 330. As shown in Figs. 11 to 13, the rotation balance correction portion 370 is arranged at the cylindrical portion 381 (one example of an end portion) of the rotor blade unit 322a, which is positioned closest to the first inlet port P11 side, of the multiple stages of the rotor blade units 322. The rotation balance correction portion 370 is arranged accessible through the first inlet port P11.

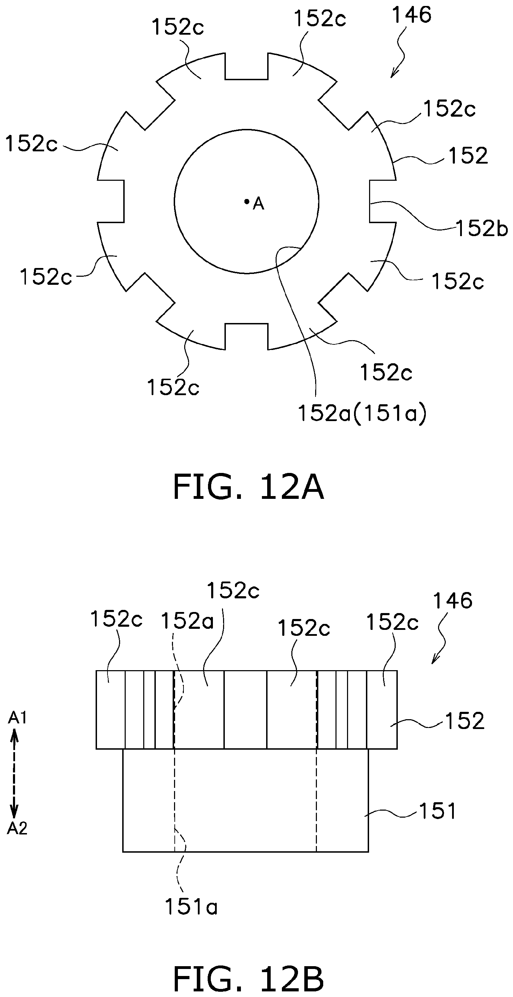

The rotation balance correction portion 370 includes multiple balance correction holes 371 and setscrews 372 (one example of a correction weight). As shown in Figs. 9 and 10, the multiple balance correction holes 371 are formed at equal intervals along a circumferential direction at a side surface 381a of the cylindrical portion 381. The circumferential direction is a circumferential direction about the axis A of the rotor 330. For example, as shown in Fig. 10, 12 balance correction holes 371 are provided at an equal interval of 30 degrees at the cylindrical portion 381. As shown in Fig. 10, each balance correction hole 371 is formed so as to extend from the side surface 381a of the cylindrical portion 381 toward the axis A. As shown in Fig. 8, each balance correction hole 371 is inclined to the side (an outlet port P21 side) opposite to the first inlet port P11 while extending from the first inlet port P11 side toward the center axis A.

The setscrews 372 are arranged as necessary in all or some of the multiple balance correction holes 371 in order to keep the rotation balance. Multiple types of setscrews 372 are prepared, and are used as necessary to keep the rotation balance. The multiple types of setscrews 372 are setscrews different from each other in length and weight. An internal thread shape is formed at an inner peripheral surface of the balance correction hole 371. An external thread shape is formed at an outer peripheral surface of the setscrew 372. The setscrew 372 is screwed into the balance correction hole 371 so that the setscrew 372 can be inserted into and arranged in the balance correction hole 371. Since the setscrew 372 is screwed into the balance correction hole 371 as described above, the position of the setscrew 372 can be fixed in the balance correction hole 371 even when the rotor 330 rotates. Fig. 8 shows a state in which the setscrew 372 is arranged in the left balance correction hole 371 and no setscrew 372 is arranged in the right balance correction hole 371.

A groove 382 is formed at an upper surface 381b of the cylindrical portion 381 of the rotor blade unit 322a. As shown in Fig. 9, the groove 382 is formed in a circular shape about the axis A. The above-described multiple balance correction holes 371 communicate with the groove 382. In a case where no groove 382 is formed, when the setscrew 372 is inserted into the balance correction hole 371, a space is formed behind the setscrew 372 and gas leaks from such a space upon vacuuming. The groove 382 is provided for gas venting.

Fig. 11 is a sectional view showing a state in which a tool 400 is inserted into the rotation balance correction portion 370 through the first inlet port P11 to correct the balance. The tool 400 may include, for example, a screwdriver for rotating the setscrew 372. The tool 400 is inserted through the first inlet port P11, and while the rotation balance is being checked, the setscrew 372 is inserted into a predetermined one of the multiple balance correction holes 371. In this manner, the rotation balance of the rotor 330 can be corrected.

### (Other Embodiments)

In the above-described embodiments, the magnet nut 46 is formed with the multiple through-holes 52c, but the shape of the magnet nut 46 is not limited as long as the magnet nut 46 can be rotated with the tool locked. The holes of the second portion 52 of the magnet nut 46 do not necessarily penetrate the second portion 52, and may only be recessed.

A magnet nut 146 shown in Figs. 12A and 12B may be employed. Fig. 12A is a plan view of the magnet nut 146 of a variation of the embodiment. Fig. 12B is a side view of the magnet nut 146. The magnet nut 146 has a first portion 151 and a second portion 152. The first portion 151 of the magnet nut 146 has a configuration similar to that of the first portion 51 of the above-described magnet nut 46. The second portion 152 of the magnet nut 146 is connected to an end (an end in the first direction A1 side) of the first portion 151 on the side opposite to the first permanent magnet 41 side. The second portion 152 is in a ring shape. The second portion 152 is arranged coaxially with the first portion 151. The inner diameter of the second portion 152 is the same as the inner diameter of the first portion 151. An inner peripheral surface 152a of the second portion 152 and an inner peripheral surface 151a of the first portion 151 are connected to each other with no step, and internal thread shapes are formed at both inner peripheral surfaces. Multiple raised portions 152c are formed outward of an outer surface 152b of the second portion 152 in the radial direction. The multiple raised portions 152c are formed at equal intervals in the circumferential direction along the outer surface 152b. The raised portion 152c protrudes outward of the outer surface 152b in the radial direction B. In the example shown in Fig. 12A, eight raised portions 152c are formed. The rotation tool 61 is inserted into between adjacent ones of the raised portions 152c, and is locked between the raised portions 152c. In this manner, the magnet nut 146 can be rotated. In this case, the shape of the tip end 61a of the rotation tool 61 is preferably in a quadrangular prism shape than a columnar shape because the rotation tool 61 can be easily locked between the raised portions 152c. A hook wrench-shaped rotation tool may be used as the rotation tool 61.

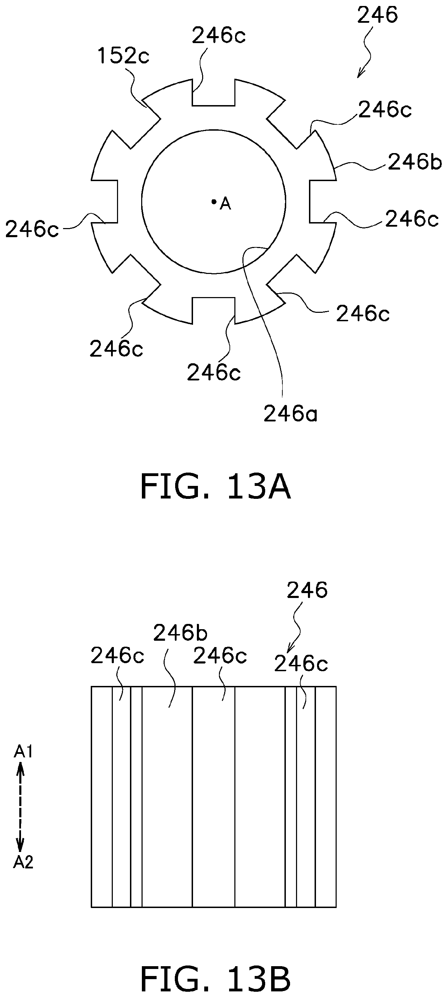

A magnet nut 246 shown in Figs. 13A and 13B may be employed. Fig. 13A is a plan view of the magnet nut 246. Fig. 13B is a side view of the magnet nut 246. The magnet nut 246 is in a ring shape about the axis A. An internal thread shape is formed at an inner surface 246a of the magnet nut 246, and engages with the external thread shape of the outer peripheral surface of the magnet holder portion 16. Multiple recessed portions 246c are formed at an outer surface 246b of the magnet nut 246. The recessed portion 246c is formed from an end of the magnet nut 246 on the first direction A1 side to an end of the magnet nut 246 on the second direction A2 side along the axis A direction. Note that the recessed portion 246c is not necessarily formed at a portion facing the fixing member 43 and may be formed only on the first direction A1 side.

In the above-described embodiments, the configuration in which the recessed portions 34b are formed at the thrust nut 34 in order to measure the preload has been described, but the present disclosure is not limited to this configuration and the force toward the second direction A2 side may only be required to be applied to the thrust nut 34.

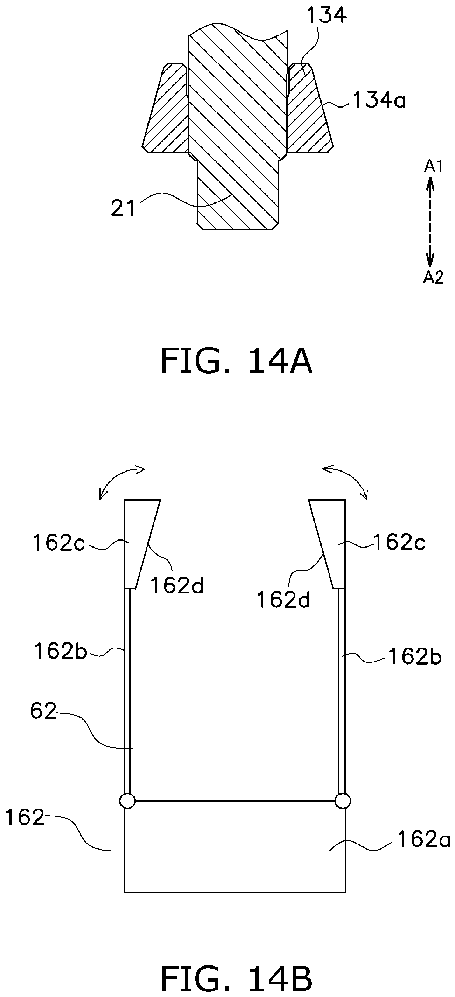

For example, a thrust nut 134 shown in Fig. 14A may be used. Fig. 14A is a sectional view of the thrust nut 134 arranged on the shaft 21. An outer surface 134a (one example of an engagement target portion) of the thrust nut 134 is inclined so as to expand outward to the side (the second direction A2 side) opposite to the rolling bearing 33. The thrust nut 134 is formed such that a sectional shape perpendicular to the center axis expands in the second direction A2.

Fig. 14B is a schematic view of a gripping tool 162. The gripping tool 162 has, for example, a main body portion 162a and a pair of turning portions 162b turnable (see arrows) relative to the main body portion 162a. Each turning portion 162b extends from the main body portion 162a in the first direction A1. The pair of turning portions 162b is arranged to face each other. An inner peripheral surface 162d of a tip end 162c of each turning portion 162b is inclined outward in the second direction A2. An interval between the inner peripheral surfaces 162d of the pair of turning portions 162b expands in the second direction A2.

The inner peripheral surfaces 162d sandwich the outer surface 134a of the thrust nut 134 so that the gripping tool 162 can engage with the thrust nut 134. In the engaged state, the gripping tool 162 is moved in the second direction A2 so that the force can be applied to the thrust nut 134 in the second direction A2. In the above-described embodiment, the vacuum pump 1 used for the leak detector has been described, but the present invention is not limited to the leak detector.

In the above-described embodiments, the through-holes 52c, the raised portions 152c, and the recessed portions 246c are formed at equal intervals along the circumferential direction, but are not necessarily formed at equal intervals.

In the above-described embodiment, the setscrew 372 is inserted into the balance correction hole 371, but the present disclosure is not limited to the setscrew 372 as along as the rotation balance can be corrected using the weight.

In the above-described embodiment, the balance correction hole 371 is inclined to the side opposite to the first inlet port P11 while extending from the side surface 381a of the cylindrical portion 381 toward the axis A, but is not necessarily inclined and may be formed perpendicularly while extending from the side surface 381a toward the axis A.

Note that the configurations described in each embodiment may be freely combined. However, the invention is solely defined by the appended claims.

In the vacuum pump as described above, the tool can be inserted through the inlet port formed at the side surface of the housing, and be locked in the locking portion of the adjustment member. Thus, the position of the adjustment member is moved by rotation of the adjustment member so that the position of the first magnet with respect to the second magnet can be adjusted. By adjustment of the position of the first magnet, a proper preload can be applied to a rolling bearing used for supporting the rotor on the housing. Moreover, since the position of the first magnet can be adjusted from the outside of the housing, the preload can be adjusted even after a component such as the rotor has been incorporated into the housing.

In the vacuum pump as described above, the tool is inserted through the inlet port formed at the side surface, and is hooked on the edges of the through-holes, recessed portions, or raised portions formed at the side surface of the adjustment member. In this manner, the adjustment member can be rotated.

In the vacuum pump as described above, the locking portion can be formed at such a position that the locking portion does not interfere with the fixing member fixing the position of the second magnet. Moreover, since the second portion formed with the locking portion is arranged to face the inlet port, the tool inserted through the inlet port is easily locked in the locking portion and the adjustment member is easily rotated.

In the vacuum pump as described above, the adjustment member can be rotated in such a manner that the tool is moved right and left with inserted into the through-hole. Moreover, since the inner diameter of the second portion is greater, contact of the tool with the magnet holder portion can be reduced.

In the vacuum pump as described above, the adjustment member is moved by the tool so that the position of the first magnet with respect to the second magnet can be adjusted and a proper preload can be applied to the rolling bearing.

In the vacuum pump as described above, while the tool for preload measurement is inserted from the side opposite to the rolling bearing to measure the preload, the position of the first magnet with respect to the second magnet can be adjusted in such a manner that the adjustment member is moved by the adjustment tool inserted through the inlet port. Moreover, even in a case where the inlet port is formed at the side surface, the preload application member is pulled from the side opposite to the inlet port so that the preload can be measured.

In the vacuum pump as described above, the tool for preload measurement is locked in the recessed portion so that the force can be applied to the preload application member in the direction toward the side opposite to the inlet port and the preload can be measured.

In the vacuum pump as described above, the preload application member is locked by a portion, which corresponds to the inclined surface, of the tool for preload measurement so that the force can be applied to the preload application member in the direction toward the side opposite to the inlet port and the preload can be measured.

In the vacuum pump as described above, the magnet holder portion is formed integrally with the case, and therefore, the number of components can be reduced. Moreover, the coaxiality between the rolling bearing used for supporting the rotor on the housing and the magnetic bearing can be improved, tilting of the rotation axis of the rotor can be reduced, and vibration reduction and life extension can be achieved.

In the vacuum pump as described above, the rotation balance of the rotor can be corrected through the inlet port at the side surface. Thus, even in the case of the configuration in which the inlet port is provided at the side surface, the balance can be corrected with the rotor incorporated into the case, and vibration during operation including acceleration can be reduced. In, e.g., a case where a magnet holder portion is formed integrally with a case, a rotor is incorporated into a tool for balance correction and the balance of the rotor is correct before a rotor is incorporated into the case. However, a stationary-side magnet used for the tool for balance correction is different from that used for the case of the product. Moreover, the axis of the magnet holder portion of the case of the product and that of the tool for balance correction are different from each other. For this reason, in some cases, the balance is lost when the rotor is incorporated into the case of the product after balance correction by the tool, leading to vibration or noise. In this aspect, the balance can be corrected with the rotor incorporated into the case of the product, and therefore, vibration and noise during operation can be reduced.

In the vacuum pump as described above, the rotation balance can be corrected in such a manner that the correction weight is arranged in any of the multiple balance correction holes or the type of correction weight to be arranged is adjusted. Note that the type of correction weight indicates correction weights different from each other in weight and length, for example.

In the vacuum pump as described above, the correction weight is screwed into the balance correction hole, and therefore, the correction weight can be arranged in the balance correction hole so as not to move due to the centrifugal force.

In the vacuum pump as described above, the balance correction hole is inclined, and therefore, the tool is easily inserted through the inlet port and the correction weight is easily inserted into the balance correction hole.

In the vacuum pump as described above, while the tool for preload measurement is inserted from the side opposite to the rolling bearing to measure the preload, the position of the first magnet with respect to the second magnet can be adjusted in such a manner that the adjustment member is moved by the adjustment tool inserted through the inlet port.

Regardless of the position of the inlet port, e.g., even in a case where the inlet port is provided at a first end portion of the housing, only one of the tool for preload measurement or the tool for adjustment can be inserted through the inlet port, and for this reason, the tools need to be alternately inserted. However, in the present aspect, the tool for adjustment can be inserted through the inlet port and the tool for preload measurement can be inserted through the position different from that of the inlet port, and therefore, the preload can be easily adjusted.

### LIST OF REFERENCE SIGNS

1: Vacuum Pump
2: Housing
3: Rotor
4: Motor
5: Stator Blade Unit
6: Stator Cylindrical Portion
7: Case
8: Base
8a: Recessed Portion
8b: Through-Hole
9: Lid
11: First End Portion
12: Second End Portion
13: Side Portion
14: Inlet Port
15: Base End Portion
16: Magnet Holder Portion
16a: Recessed Portion
21: Shaft
22: Rotor Blade Unit
23: Rotor Cylindrical Portion
25: Rotor Blade
26: Motor Rotor
27: Motor Stator
28: Stator Blade
31: Protective Bearing
32: Magnetic Bearing
33: Rolling Bearing
34: Thrust Nut
41: First Permanent Magnet
42: Second Permanent Magnet
43: Fixing Member
44: Disc Spring
45: Spring Support Member
46: Magnet Nut
51: First Portion
51a: Inner Peripheral Surface
52: Second Portion
52a: Inner Peripheral Surface
52b: Side Surface
52c: Through-Hole
61: Rotation Tool
61a: Tip End
62: Tool
63: Force Gauge
146: Magnet Nut
151: First Portion
152: Second Portion
152a: Inner Peripheral Surface
152b: Outer Surface
152c: Raised Portion
246: Magnet Nut
246a: Inner Surface
246b: Outer Surface
246c: Recessed Portion
300: Vacuum Pump
322: Rotor Blade Unit
330: Rotor
370: Rotation Balance Correction Portion
371: Balance Correction Hole
372: Setscrew
381: Cylindrical Portion
381a: Side Surface
381b: Upper Surface
382: Groove
400: Tool
A: Axis
A1: First Direction
A2: Second Direction
B: Radial Direction
D: Drag Pump Portion
P11: First Suction Port
P12: Second Suction Port
P13: Second Suction Port
P21: Outlet Port
R1: Inner Diameter
R2: Inner Diameter
R3: Outer Diameter
R4: Outer Diameter
T: Turbine Portion

## Claims

1. A vacuum pump (1, 300) comprising:
a rotatable rotor (3, 330);
a housing (2) including an inlet port (P11) at a side surface parallel to the direction of the axis of rotation and housing the rotor; and
a magnetic bearing (32) including a first magnet (41) arranged at a periphery of a magnet holder portion (16) fixed to the housing and a second magnet (42) arranged at the rotor to face the first magnet in a radial direction (B);
**characterised in that** the vacuum pump further comprises an adjustment member (46, 146, 246) including, at an inner surface thereof, a second thread shape engaged with a first thread shape formed at the periphery of the magnet holder portion and configured to move in a direction along a rotation axis (A) of the rotor by rotating relative to the magnet holder portion to adjust a position of the first magnet with respect to the second magnet,
**in that** the adjustment member includes, at a side surface thereof, a locking portion (52c,152c,246c) arranged to face the inlet port (P11) in the radial direction, configured to lock a tool (61) insertable through the inlet port so that the position of the adjustment member is moved by rotation of the adjustment member, and
**in that** the locking portion includes multiple through-holes (52c), multiple recessed portions (246c), or multiple raised portions (152c) formed at the side surface of the adjustment member along a circumferential direction.

2. The vacuum pump according to claim 1, further comprising:
a fixing member (43) arranged on the rotor and fixing a position of the second magnet,
wherein the adjustment member includes
a first portion (51, 151) arranged to face the fixing member in the radial direction and formed with the second thread shape, and
a second portion (52, 152) arranged to face the inlet port and formed with the locking portion.

3. The vacuum pump according to claim 2, wherein
an inner diameter of the second portion is formed greater than an inner diameter of the first portion, and
the locking portion includes multiple through-holes (52c) formed at an equal interval along the circumferential direction at a side surface of the second portion.

4. The vacuum pump according to claim 1, wherein
the housing includes
a case (7) formed with the inlet port and covering the rotor, and
a base (8) connected to the case, and
the magnet holder portion is formed integrally with the case.

## Patentansprüche

1. Eine Vakuumpumpe (1, 300), umfassend:
einen drehbaren Rotor (3, 330);
ein Gehäuse (2), das einen Einlassport (P11) an einer Seitenfläche aufweist, die parallel zur Richtung der Rotationsachse verläuft, und den Rotor aufnimmt; und
ein Magnetlager (32), das Folgendes beinhaltet: einen ersten Magneten (41), der an einem Umfang eines am Gehäuse befestigten Magnethalterabschnitts (16) angeordnet ist, und einen zweiten Magneten (42), der am Rotor angeordnet ist, um dem ersten Magneten in radialer Richtung (B) gegenüberzuliegen;
**dadurch gekennzeichnet, dass** die Vakuumpumpe ferner ein Einstellelement (46, 146, 246) beinhaltet, das an einer Innenfläche desselben eine zweite Gewindeform beinhaltet, die mit einer ersten Gewindeform in Eingriff steht, die am Umfang des Magnethalterabschnitts ausgebildet ist, und das konfiguriert ist, um sich in einer Richtung entlang einer Rotationsachse (A) des Rotors durch Drehen relativ zum Magnethalterabschnitt zu bewegen, um eine Position des ersten Magneten in Bezug auf den zweiten Magneten einzustellen, **dass**
das Einstellelement an einer Seitenfläche desselben einen Verriegelungsabschnitt (52c, 152c, 246c) beinhaltet, der so angeordnet ist, dass er in radialer Richtung des Einlassports (P11) zugewandt ist, und der konfiguriert ist, um ein durch den Einlassport einführbares Werkzeug (61) verriegeln zu können, sodass die Position des Einstellelements durch Drehen des Einstellelements verändert wird, und **dass**
der Verriegelungsabschnitt mehrere Durchgangslöcher (52c), mehrere vertiefte Abschnitte (246c) oder mehrere erhabene Abschnitte (152c) beinhaltet, die an der Seitenfläche des Einstellelements entlang einer Umfangsrichtung ausgebildet sind.

2. Die Vakuumpumpe nach Anspruch 1, ferner umfassend:
ein Fixierelement (43), das am Rotor angeordnet ist und eine Position des zweiten Magneten fixiert,
wobei das Einstellelement Folgendes beinhaltet:
einen ersten Abschnitt (51, 151), der angeordnet ist, um dem Fixierelement in radialer Richtung gegenüberzuliegen und mit der zweiten Gewindeform ausgebildet ist, sowie
einen zweiten Abschnitt (52, 152), der angeordnet ist, um dem Einlassport gegenüberzuliegen und mit dem Verriegelungsabschnitt ausgebildet ist.

3. Die Vakuumpumpe nach Anspruch 2, wobei
ein Innendurchmesser des zweiten Abschnitts größer als ein Innendurchmesser des ersten Abschnitts ausgebildet ist und wobei
der Verriegelungsabschnitt mehrere Durchgangslöcher (52c) beinhaltet, die in gleichen Abständen entlang der Umfangsrichtung an einer Seitenfläche des zweiten Abschnitts ausgebildet sind.

4. Die Vakuumpumpe nach Anspruch 1, wobei
das Gehäuse Folgendes beinhaltet:
ein Gehäuseteil (7), das mit dem Einlassport ausgebildet ist und den Rotor abdeckt, sowie
eine Basis (8), die mit dem Gehäuseteil verbunden ist, wobei
der Magnethalterungsabschnitt einstückig mit dem Gehäuseteil ausgebildet ist.

## Revendications

1. Une pompe à vide (1, 300), comprenant :
un rotor rotatif (3, 330) ;
un boîtier (2) incluant un orifice d'entrée (P11) sur une surface latérale parallèle à la direction de l'axe de rotation, et logeant le rotor ; et
un palier magnétique (32) incluant un premier aimant (41) disposé à la périphérie d'une portion de support d'aimant (16) fixée au boîtier, et un deuxième aimant (42) disposé sur le rotor de manière à faire face au premier aimant dans une direction radiale (B) ;
**caractérisée en ce que** la pompe à vide comprend en outre un élément de réglage (46, 146, 246) incluant, au niveau d'une surface intérieure de celui-ci, une deuxième forme de filetage engagée avec une première forme de filetage formée à la périphérie de la portion de support d'aimant, et configuré pour se déplacer dans une direction le long d'un axe de rotation (A) du rotor en tournant par rapport à la portion de support d'aimant afin d'ajuster une position du premier aimant par rapport au deuxième aimant**, en ce que**
l'élément de réglage inclut, au niveau de la surface latérale de celui-ci, une portion de verrouillage (52c, 152c, 246c) agencée de manière à faire face à l'orifice d'entrée (P11) dans la direction radiale, configurée pour verrouiller un outil (61) pouvant être inséré à travers l'orifice d'entrée de manière que la position de l'élément de réglage soit déplacée par la rotation de l'élément de réglage, **et en ce que**
la portion de verrouillage inclut plusieurs trous traversants (52c), plusieurs portions en retrait (246c) ou plusieurs portions en relief (152c) formées sur la surface latérale de l'élément de réglage le long d'une direction circonférentielle.

2. La pompe à vide d'après la revendication 1, comprenant en outre :
un élément de fixation (43) disposé sur le rotor et fixant une position du deuxième aimant,
sachant que l'élément de réglage inclut
une première portion (51, 151) agencée de manière à faire face à l'élément de fixation dans la direction radiale et formée avec la deuxième forme de filetage, et
une deuxième portion (52, 152) agencée de manière à faire face à l'orifice d'entrée et formée avec la portion de verrouillage.

3. La pompe à vide d'après la revendication 2, sachant que
un diamètre intérieur de la deuxième portion est formé plus grand que le diamètre intérieur de la première portion, et que
la portion de verrouillage inclut plusieurs trous traversants (52c) formés à intervalles égaux le long de la direction circonférentielle sur une surface latérale de la deuxième portion.

4. La pompe à vide d'après la revendication 1, sachant que le boîtier inclut
une partie de boîtier (case) (7) formée avec l'orifice d'entrée et recouvrant le rotor, et
une base (8) reliée à la partie de boîtier, et sachant que
la portion de support d'aimant est formée d'un seul tenant avec la partie de boîtier.
